# FASCICULE DE BREVET EUROPEEN

(11) **EP 3 647 546 B1**
(45) Date de publication et mention de la délivrance du brevet: **27.11.2024**
(21) Numéro de dépôt: 19205722.2
(22) Date de dépôt: 28.10.2019
(51) Int. Cl.: F01D 7/00, F01D 15/12, F02C 7/36

(54) **MODULE DE SOUFFLANTE A PALES A CALAGE VARIABLE**
GEBLÄSEMODUL MIT SCHAUFELN MIT VARIABLEM EINSTELLWINKEL
FAN MODULE WITH BLADES WITH VARIABLE PITCH ANGLE

(30) Priorité: 30.10.2018 FR 1860023
(43) Date de publication de la demande: 06.05.2020
(73) Titulaire: SAFRAN AIRCRAFT ENGINES, 75015 Paris (FR)
(72) Inventeur: LEMARCHAND, Kevin, Morgane, 77550 MOISSY-CRAMAYEL (FR); CHARIER, Gilles, Alain, Marie, 77550 MOISSY-CRAMAYEL (FR)
(74) Mandataire: Gevers & Orès

(56) Documents cités:
- FR-A1- 2 248 415
- US-A- 4 704 862

## Description

### 1. Domaine de l'invention

La présente invention concerne le domaine des turbomachines. Elle vise en particulier un module de soufflante à pales à calage variable pour un ensemble propulsif.

### 2. Etat de la technique

Une soufflante munie de pales à calage ou pas variable permet de régler le calage des pales, et plus précisément l'angle de cale des pales en fonction des paramètres de vol de manière à optimiser le fonctionnement de la soufflante. De manière générale, cette configuration permet d'optimiser l'ensemble propulsif dans lequel une telle soufflante est intégrée. Pour rappel, l'angle de calage d'une pale correspond à l'angle, dans un plan longitudinal perpendiculaire à l'axe de rotation de la pale, entre la corde de la pale et le plan de rotation de la soufflante. Les pales à calage variable peuvent occuper une position dite d'inversion de poussée (connue sous le terme anglais « reverse ») dans laquelle celles-ci permettent de générer une contre poussée de manière à participer au ralentissement de l'aéronef et une position de mise en drapeau dans laquelle, en cas de défaillance ou de panne, celles-ci permettent de limiter leur résistance. Des exemples de telles soufflantes sont décrits dans les documents de brevets FR-A1-2 248 415 et US-A- 4 704 862.

Les soufflantes à calage variable, notamment dans le cadre de soufflante carénée, permettent également de réduire sensiblement la surface de la nacelle et ainsi la traînée de l'ensemble propulsif. En effet, l'augmentation du taux de dilution opérée depuis plusieurs années influe sur le diamètre de la turbomachine lequel est contraint par une garde au sol minimale à respecter du fait de l'intégration de la turbomachine le plus souvent sous l'aile d'un aéronef. L'augmentation du taux de dilution est réalisée en particulier et en priorité sur le diamètre de la soufflante qui peut diminuer le taux de compression de la soufflante et entraîner une modification de son opérabilité. Le calage des pales permet donc de répondre à ces contraintes. Celui-ci permet également d'éviter de modifier la surface externe extérieure de la nacelle pour y intégrer des inverseurs de poussée qui influe sur la traînée.

Il est connu de la demande de brevet FR1754381 un module de soufflante 1 avec une telle soufflante 2 à pales à calage variable. Le module de soufflante comprend un système de changement de calage 22 ou pas des pales comprenant un moyen de commande 23 agissant sur des moyens de liaison 34 connectés aux pieds 18 des pales de la soufflante et un palier de transfert de charge 28 qui est monté entre le moyen de commande 23 et les pieds 28 des pales. Le système de changement de calage 22 est installé dans un espace annulaire 14 formé entre l'arbre de rotor 10 de la soufflante et une virole annulaire 11 solidaire d'une extrémité de l'arbre de rotor. Cette virole annulaire 11 entoure au moins en partie le système de changement de calage 22.

Cependant, la configuration d'un système de changement de calage tel que décrit ci-dessus reste encombrante puisque la virole annulaire 11 solidaire de l'arbre de rotor en amont contourne au moins le moyen de commande 23 et allonge quelque peu la longueur de l'arbre de rotor 10. De plus, l'espace annulaire radial disponible sous l'axe de pivotement des pales pour l'intégration du système de changement de calage impose encore un rapport de moyeu élevé.

### 3. Objectif de l'invention

La présente invention a notamment pour objectif de fournir un module de soufflante permettant de réduire l'encombrement radial ainsi que le rapport de moyeu tout en évitant les modifications structurelles importantes.

### 4. Exposé de l'invention

On parvient à cet objectif conformément à l'invention grâce à un module de soufflante à pales à calage variable pour un ensemble propulsif d'axe longitudinal, ledit module de soufflante comprenant :
- un rotor comprenant un arbre de rotor suivant l'axe longitudinal et portant les pales de la soufflante,
- un système de changement du calage des pales comprenant des moyens de liaison reliés aux pales de la soufflante et un moyen de commande agissant sur les moyens de liaison, le moyen de commande comportant un corps fixe et un corps mobile en translation selon l'axe longitudinal par rapport audit corps fixe,
- un palier de transfert de charge agencé entre les moyens de liaison et le moyen de commande, et
- un arbre de puissance entraînant l'arbre de rotor via un réducteur de vitesse à train épicycloïdal, le réducteur de vitesse comprenant un planétaire relié à l'arbre de puissance et un porte-satellites comprenant une virole annulaire fixe solidaire d'un carter fixe, le corps fixe du moyen de commande étant monté sur ladite virole annulaire,
le module comprenant au moins un palier interne agencé entre la virole annulaire fixe du porte-satellites et l'arbre de rotor de la soufflante, et un premier et un deuxième paliers étant montés entre une couronne de support solidaire du carter fixe et l'arbre de rotor de la soufflante.

Ainsi, cette solution permet d'atteindre l'objectif susmentionné. En particulier, l'architecture du réducteur de vitesse avec le porte-satellites fixe permet de disposer d'une structure fixe destinée à supporter le corps fixe du moyen de commande dans l'espace annulaire du rotor de soufflante. En d'autres termes, le support fixe du moyen de commande passe par le porte-satellites. L'arbre de rotor de soufflante (et la virole annulaire qui en est solidaire) ne faisant plus le tour du système de changement de calage, les encombrements axial et radial sont réduits. Le fait de réduire l'encombrement radial influe également sur la réduction du rapport du moyeu de soufflante. Ce rapport de moyeu est le quotient entre le diamètre à l'extrémité radiale interne des pales de soufflantes mesuré au bord d'attaque de la pale de soufflante et le diamètre à l'extrémité radiale externe des pales mesuré au bord d'attaque des pales. Le porte à faux dû à la longueur de l'arbre de rotor de soufflante dans l'art antérieur est également réduit du fait du raccourcissement axial de l'arbre de rotor. De plus, cette configuration ne nécessite pas de système de canalisation, dont l'acronyme anglais est « OTB » pour « Oil Transfert Bearing », permettant d'acheminer du lubrifiant d'un repère fixe (source d'alimentation de la turbomachine) vers le système tournant (le système de changement de calage) qui peut être source de fuites et de balourd supplémentaire.

Suivant une caractéristique optionnelle, le moyen de commande est installé radialement au moins en partie à l'intérieur de l'arbre de rotor de la soufflante, en particulier selon un axe de pivotement des pales. Cette configuration contribue à réduire en particulier l'encombrement radial.

Selon une caractéristique optionnelle, le palier de transfert de charge est monté sur le corps mobile du moyen de commande et coopère avec les moyens de liaison.

Selon une caractéristique optionnelle, le réducteur de vitesse comprend une couronne extérieure couplée à l'arbre de rotor de soufflante. Cette configuration facilite l'intégration du système de changement de calage et notamment le moyen de commande radialement à l'intérieur de l'arbre de rotor de soufflante.

Suivant une autre caractéristique optionnelle, le porte-satellites porte des satellites qui tournent chacun autour d'un axe sensiblement parallèle à l'axe longitudinal X.

Suivant une autre caractéristique optionnelle, chaque satellite engrène avec le planétaire et la couronne extérieure.

Selon une autre caractéristique optionnelle, le palier de transfert de charge comprend une bague interne, une bague externe et un roulement à deux rangées de billes montées entre la bague interne et la bague externe, la bague interne étant reliée à une virole interne solidaire du corps mobile et la bague externe étant reliée à une virole externe connectée aux moyens de liaison.

Suivant un mode de réalisation de l'invention, les moyens de liaison comprennent des biellettes avec chacune une première extrémité articulée avec une chape de la virole externe et une deuxième extrémité articulée avec un maneton du pied de pale.

Suivant un autre mode de réalisation de l'invention, les moyens de liaison comprennent des articulations sphériques agencées chacune dans un évidement d'un anneau solidaire de la virole externe du palier de transfert de charge et des doigts reliés chacun à une des articulations sphériques, chaque doigt étant solidaire d'un maneton du pied de pale. Une telle configuration permet de réduire davantage l'encombrement radial ce qui influe sur le rapport de moyeu de la soufflante. En effet, ces biellettes remplacent la liaison articulation sphérique-doigt, le doigt occupant un espace radial qui est supprimé dans cette configuration.

Suivant encore une autre caractéristique optionnelle, le module de soufflante comprend au moins un organe de liaison reliant la virole externe au rotor de soufflante. Cet organe de liaison favorise la suspension du système de changement de calage au sein du rotor de soufflante.

### 5. Brève description des figures

L'invention sera mieux comprise, et d'autres buts, détails, caractéristiques et avantages de celle-ci apparaîtront plus clairement à la lecture de la description explicative détaillée qui va suivre, de modes de réalisation de l'invention donnés à titre d'exemples purement illustratifs et non limitatifs, en référence aux dessins schématiques annexés dans lesquels :
La figure 1 représente une coupe axiale d'un module de soufflante de l'art antérieur ;
La figure 2 représente schématiquement suivant une coupe axiale un premier mode de réalisation d'un module de soufflante suivant l'invention ; et
La figure 3 illustre de manière schématique suivant une coupe axiale un deuxième mode de réalisation d'un module de soufflante selon l'invention.

### 6. Description de modes de réalisation de l'invention

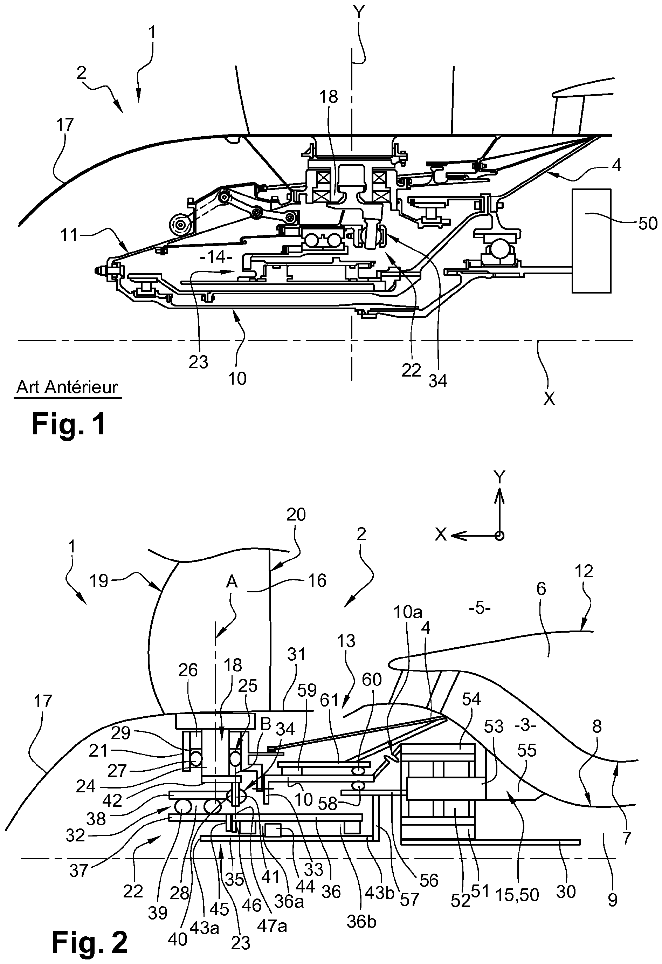

Sur la figure 1 est représenté un module de soufflante d'une turbomachine destinée à être montée sur un aéronef. Cette turbomachine est ici une turbomachine double flux qui s'étend suivant un axe longitudinal X. Les références numériques correspondantes des éléments de cette turbomachine décrits précédemment sont conservées dans la suite dans la description.

En référence à la figure 2, la turbomachine double flux comprend de manière générale une nacelle externe (non représentée) enveloppant un générateur de gaz (non représenté) en amont duquel est montée une soufflante 2. Dans la présente invention, et de manière générale, les termes « amont » et « aval » sont définis par rapport à la circulation des gaz dans la turbomachine qui est sensiblement parallèle à l'axe longitudinal X. De même, les termes « interne », « externe », « au-dessus », « en-dessous » et « radial » sont définis par rapport à l'axe radial Y perpendiculaire à l'axe longitudinal X et au regard de l'éloignement par rapport à l'axe longitudinal X. Le générateur de gaz comprend par exemple, d'amont en aval, un compresseur basse pression, un compresseur haute pression, une chambre de combustion, une turbine haute pression et une turbine basse pression.

La soufflante 2 est ici carénée par un carter de soufflante (non représenté) solidaire de la nacelle. La soufflante 2 comprime l'air entrant dans la turbomachine qui se divise en un flux chaud ou flux primaire circulant dans une veine primaire 3 annulaire laquelle traverse le générateur de gaz et un flux froid ou flux secondaire circulant dans une veine secondaire 5 annulaire autour du générateur de gaz. En particulier, la veine primaire 3 et la veine secondaire 5 sont séparées par un carter inter-veine 6 annulaire entourant le générateur de gaz. Le carter inter-veine 6 comprend une paroi radialement interne 7 qui délimite avec une surface annulaire externe 8 d'un carter interne 9, la veine primaire 3. Le carter inter-veine 6 comprend également une paroi radialement externe 12 délimitant avec une surface annulaire interne (non représentée) de la nacelle la veine secondaire 5.

Le module de soufflante 1 comprend un rotor de soufflante 13 traversé par un arbre de rotor 10 de soufflante qui est centré sur l'axe longitudinal X. Le rotor de soufflante 13 est enveloppé par un cône d'entrée 17 qui est agencé en amont du carter interne 9. Le carter interne 9 est fixe par rapport au rotor de soufflante 13. L'arbre de rotor 10 est entraîné en rotation par un arbre de puissance 30 de la turbomachine via un mécanisme de transmission de puissance 15 pour réduire la vitesse de rotation de la soufflante 2. Cet arbre de puissance 30 est un arbre de turbine basse pression qui relie le compresseur basse pression et la turbine basse pression pour former un corps basse pression. De même, un arbre haute pression (non représenté) relie le compresseur haute pression et la turbine haute pression pour former un corps haute pression. De manière alternative, l'arbre de puissance est un arbre de turbine de puissance indépendant du générateur de gaz. Le mécanisme de transmission de puissance 15 permet l'agencement d'une soufflante avec un diamètre important, lequel engendre une augmentation du taux de dilution. Dans le présent exemple, le taux de dilution de la soufflante est supérieur à 10. De préférence, le taux de dilution est compris entre 15 et 20.

Le rotor de soufflante 13 porte également une série de pales 16 à calage variable. Ces pales 16 s'étendent radialement vers l'extérieur et sont délimitées par le carter de soufflante. Caque pale 16 de soufflante présente un bord d'attaque 19, amont et un bord de fuite 20, aval opposées axialement (suivant l'axe longitudinal X). Le rotor 13 comprend également un anneau de support 21 des pales 16 centré sur l'axe longitudinal X et pourvu de logements cylindriques 29 radiaux régulièrement répartis sur sa périphérie. Les pales 16 de soufflante comprennent chacune un pied 18 reçu pivotant suivant un axe de pivotement A parallèle à l'axe radial Y dans un des logements cylindriques 29. En particulier, chaque pied 18 de pale se présente sous la forme d'une attache en forme de bulbe lequel est solidaire d'un pivot 24 qui est monté dans le logement cylindrique 29. Chaque pied 18 pivote dans un logement cylindrique 29 au moyen de paliers 25 à roulements. Dans le présent exemple, deux paliers à roulement sont montés dans le logement cylindrique 2. Ces paliers sont montés l'un au-dessus de l'autre suivant l'axe radial. Les éléments roulants de ces deux paliers 25 comprennent respectivement des rouleaux 26 et des billes 27. Les rouleaux 26 sont disposés radialement au-dessus des billes 27. Comme cela est visible sur la figure 1, les pieds 18 des pales sont recouverts par une enveloppe annulaire 31 externe qui est centrée sur l'axe longitudinal X et qui présente une section sensiblement circulaire. Cette enveloppe externe 31 prolonge vers l'aval le cône d'entrée 17 de la soufflante et assure une continuité aérodynamique avec le cône 17.

Le module de soufflante 1 comporte un système de changement de calage 22 ou de pas des pales de la soufflante 2 permettant de faire varier le calage ou le pas des pales autour de leurs axes de pivotement A radiaux de sorte qu'elles puissent avoir des positions angulaires différentes selon les conditions de fonctionnement de la turbomachine et les phases de vol concernées. Pour cela, le système de changement de calage 22 comprend des moyens de liaison 34 reliés aux pales 16 de soufflante et un moyen de commande 23 agissant sur les moyens de liaison 34. Le système de changement de calage 22 comprend encore un module de transfert de charge 32 équipé d'un palier de transfert de charge 28 connu sous l'acronyme anglais « LTB » pour « Load Transferr Bearing ». Ce palier de transfert de charge 28 est installé entre les moyens de liaison 34 et le moyen de commande 23 de manière à assurer la transmission des efforts du moyen de commande 23 aux moyens de liaison 34.

Le moyen de commande 23 comprend un actionneur annulaire linéaire d'axe coaxial à l'axe longitudinal X. L'actionneur linéaire comprend un corps fixe 35 et un corps mobile 36 en translation par rapport au corps fixe 35 le long de l'axe longitudinal X. De préférence, mais non limitativement, l'actionneur est hydraulique. Le déplacement du corps mobile 36 suivant l'axe longitudinal entraîne le mouvement des moyens de liaison 34, via le module de transfert de charge 32, de telle manière que celui-ci engendre le pivotement des pales 16 de soufflante autour de l'axe de pivotement A et ainsi le calage des pales 16. Le palier de transfert de charge 28 est un palier à roulement comprenant une bague interne solidaire d'une virole annulaire interne 37 et une bague externe solidaire d'une virole annulaire externe 38. La virole annulaire interne 37 est solidaire du corps mobile 36 tandis que la virole annulaire externe 38 est solidaire des moyens de liaison 34. La virole interne annulaire 37 comprend une première bride annulaire radiale 45 qui est fixée sur une deuxième bride annulaire radiale 46 portée par le corps mobile 36. La deuxième bride annulaire radiale 46 est située plus précisément à une extrémité amont 47a du corps mobile 36. Le diamètre externe de la virole externe 37 est sensiblement identique à celui du corps mobile 36. Le roulement du palier de transfert de charge 28 comprend des éléments roulants 39 qui sont guidés dans des pistes formées dans les bagues interne et externe. Les éléments roulants 39 sont ici formés par deux rangées de billes lesquelles peuvent être du type à contact oblique orientés en sens opposés de manière à optimiser la transmission des efforts axiaux.

Sur l'exemple illustré de la figure 2, les moyens de liaison 34 comprennent pour chaque pale 16 une articulation sphérique 40 et un doigt 41 coopérant avec cette articulation sphérique 40. Plus précisément, le doigt 41 s'étend sensiblement radialement depuis un maneton 42 qui est prévu transversalement à l'extrémité libre du pivot 24 de chaque pied 18 de pale 16. Chaque articulation sphérique 40 est agencée dans un anneau (non représenté) qui est porté par la virole annulaire externe 38 du module de transfert de charge 32. L'articulation sphérique 40 comprend une sphère définissant une rotule à contact radial. La sphère présente un trou la traversant de part et d'autre suivant un axe B lequel est parallèle à l'axe radial. L'anneau, centré sur l'axe longitudinal X, comprend une pluralité d'évidements répartis sur sa périphérie. Chaque évidement enferme une sphère. Chacun des doigts 41 traverse le trou d'une sphère suivant un axe B sensiblement parallèle à l'axe radial Y. Les doigts 41 sont montés libres en rotation et en translation dans le trou de la sphère correspondante selon l'axe B. L'axe B est décalé par rapport à l'axe A de rotation de la pale 16. De manière alternative, le maneton 42 comprend un pion s'étendant dans une direction sensiblement opposée au doigt 41 et couplé en rotation, par exemple par des cannelures, avec le pivot de la pale correspondante. Le maneton 42 permet de démultiplier l'effort nécessaire pour régler le calage de la pale correspondante.

Le palier de transfert de charge 28 transforme le mouvement en translation du corps mobile 36 en un mouvement de translation et de rotation du doigt 41 relié au pivot 24 des pieds des pales 16 de la soufflante 2. De la sorte, toutes les pales 16 pivotent simultanément de manière à adopter au moins deux positions dites d'inversion de poussée et de mise en drapeau.

Plus précisément, le corps fixe 35 s'étend suivant l'axe longitudinal. Celui-ci comprend une paroi 44 radiale délimitant ici deux chambres 36a, 36b à volume variable dans le corps mobile 36 et qui sont opposées axialement. Les chambres 36a, 36b sont destinées à recevoir un fluide, par exemple hydraulique sous pression, d'une source d'alimentation fluidique de sorte que le corps mobile 36 occupe au moins deux positions. Ces positions correspondent respectivement à la position d'inversion de poussée connue en anglais sous le terme « reverse » et à la position de mise en drapeau des pales de soufflante. En particulier, dans la position d'inversion de poussée les pales de la soufflante participent au freinage de l'aéronef, à la manière des inverseurs de poussée usuels. Dans la position de mise en drapeau, les pales 16 sont alors effacées au mieux par rapport à la direction d'avance de l'aéronef, par exemple en cas de panne de la turbomachine, ce qui permet de limiter la traînée. Dans cette dernière position, l'angle de calage des pales est positif, et est généralement de l'ordre de 90°.

Le mécanisme de transmission de puissance 15 comprend un réducteur de vitesse 50 formé d'un train d'engrenage. De préférence le train d'engrenage est épicycloïdal. En particulier, le réducteur de vitesse 50 comprend un planétaire 51, des satellites 52, un porte-satellites 53 et une couronne extérieure 54. Dans le présent exemple, le planétaire 51 est centré sur l'axe longitudinal X et est solidaire en rotation avec l'arbre de puissance 30 suivant l'axe longitudinal X. Les satellites 52 sont portés par le porte-satellites 53 et tournent chacun autour d'un axe sensiblement parallèle à l'axe longitudinal X. Chacun des satellites 52 engrène avec le planétaire 51 et la couronne extérieure 54. Cette dernière est couplée avec l'arbre de rotor 10 de la soufflante et est solidaire en rotation avec l'arbre de rotor suivant l'axe longitudinal X.

En d'autres termes, le planétaire 51 constitue l'entrée du réducteur de vitesse 50 et la couronne extérieure 54 constitue la sortie du réducteur de vitesse 50. Le porte-satellites 53 est fixe par rapport à la couronne extérieure 54 et au planétaire 51. Comme cela est visible sur la figure 2, le porte-satellites 53 est relié rigidement à une platine de stator 55 du carter fixe 4. Cette dernière est elle-même rigidement connectée au carter interne fixe 9 de la turbomachine. De manière avantageuse, mais non limitativement, le rapport de réduction du réducteur de vitesse est compris entre 3 et 4.

L'arbre de rotor 10 de la soufflante entraîne l'anneau de support 21 des pales 16. Pour cela, l'arbre de rotor 10 comprend une collerette 33 s'étendant sensiblement radialement et qui est solidarisé à l'anneau de support 21. Ici, la collerette 33 s'étend vers l'intérieur de la turbomachine, soit vers l'axe longitudinal X.

Dans le présent exemple, le système de changement de calage 22 est situé radialement au moins en partie à l'intérieur de l'arbre de rotor 10 de la soufflante 2. En particulier, le moyen de commande 23 avec le corps mobile 36 et le corps fixe 35 s'étendent axialement au moins en partie à l'intérieur de l'arbre de rotor 10 par rapport à l'axe radial ce qui permet de réduire l'encombrement radial. Le corps fixe 35 comprend une première extrémité amont 43a et une deuxième extrémité aval 43b opposées axialement. La deuxième extrémité aval 43b est localisée à l'intérieur de l'arbre de rotor 10 tandis que l'extrémité amont 43a est à l'extérieur de l'arbre de rotor 10. Ici, l'arbre de rotor 10 présente une longueur axiale inférieure à celle du corps fixe

Comme cela est également illustré schématiquement sur la figure 2, l'arbre de rotor 10 comprend une souplesse 10a entre la couronne extérieure 54 et l'arbre de rotor 10 de la soufflante. Une telle souplesse permet d'éviter à la couronne extérieure 54 de subir les déformations et mouvements du rotor 10. Le réducteur de vitesse 50 se trouve donc isolé des mouvements dus à d'éventuels balourds du module de soufflante.

Selon le mode de réalisation illustré, le porte-satellites 53 comprend une virole annulaire 56 fixe sur lequel est monté le corps fixe 35 du moyen de commande 23, ici l'actionneur. Plus précisément, cette virole annulaire 56 se prolonge vers l'amont du réducteur de vitesse 50 suivant l'axe longitudinal X. La virole annulaire 56 est centrée sur l'axe longitudinal X. Dans le présent exemple, la virole annulaire 56 comprend une jupe annulaire 57 s'étendant sensiblement radialement vers l'axe longitudinal X (vers l'intérieur de la turbomachine). Le corps fixe 35 est solidarisé à la jupe annulaire 57 au niveau de sa deuxième extrémité aval 43b. La jupe annulaire 57 est disposée en amont du réducteur de vitesse 50. De manière alternative, le corps fixe 35 comprend cette jupe annulaire 57 venant se fixer sur la virole annulaire 56. Un palier interne 58 est agencé entre la virole annulaire 56 du porte-satellites 53 et l'arbre de rotor 10 de soufflante de manière à reprendre l'effort de contre poussée de l'actionneur linéaire. L'effort de contre poussée est repris par les paliers 25 qui sont installés dans les logements cylindriques 29 de l'anneau de support 21. Le palier interne 58 est un palier à roulement, centré sur l'axe longitudinal X. Ce palier interne 58 comprend en particulier une bague interne (non représentée) portée par la virole annulaire 56 et une bague externe (non représentée) portée par l'arbre de rotor 10 de soufflante. En particulier, la bague externe est rotative (du fait que celle-ci est montée sur l'arbre de rotor qui tourne) et la bague interne est fixe (du fait que celle-ci est montée sur la virole annulaire du porte-satellites qui est fixe). Le palier interne 58 est situé en amont du réducteur de vitesse 50. Les bagues interne et externe définissent une piste de roulement pour des éléments roulants, ici des billes. Ces billes sont en contact radial avec les bagues interne et externe du palier interne 58. Ce dernier est ainsi apte à supporter des charges radiales et axiales. Dans cet exemple, la jupe annulaire 57 est localisée axialement en aval du palier interne 58. Un premier palier 59 et un deuxième palier 60 (pouvant être qualifiés de paliers de soufflante car ceux-ci supportent l'arbre de rotor 10) sont également disposés entre l'arbre de rotor 10 de soufflante et une couronne de support 61 fixe, centré sur l'axe longitudinal X, et solidaire du carter fixe 4. Un de ces premier et deuxième paliers 59, 60 permet de réaliser un arrêt axial de l'arbre de rotor afin de transmettre la force propulsive dégagée par la soufflante 2 aux carters et aux suspensions de la turbomachine et enfin à l'aéronef. Les premier et deuxième paliers 59, 60 comprennent chacun une bague interne (non représentée) qui est portée par l'arbre de rotor 10 de soufflante et une deuxième bague (non représentée) qui est portée par la couronne de support 61. Les éléments roulants guidés entre les bagues interne et externe du premier palier 59 sont ici des rouleaux. A l'inverse, les éléments roulant guidés entre les bagues interne et externe du deuxième palier 60 sont ici des billes. Dans le présent exemple, c'est le deuxième palier 60 à billes qui permet la reprise des efforts axiaux. Le premier palier 59 est agencé en amont du deuxième palier 60. Ce dernier est agencé en amont du réducteur de vitesse 60. Le deuxième palier 60 est également situé radialement au-dessus du palier interne 58. Dans ce mode de réalisation ainsi décrit, le rapport de moyeu du module de soufflante est compris entre 0.25 et 0.35.

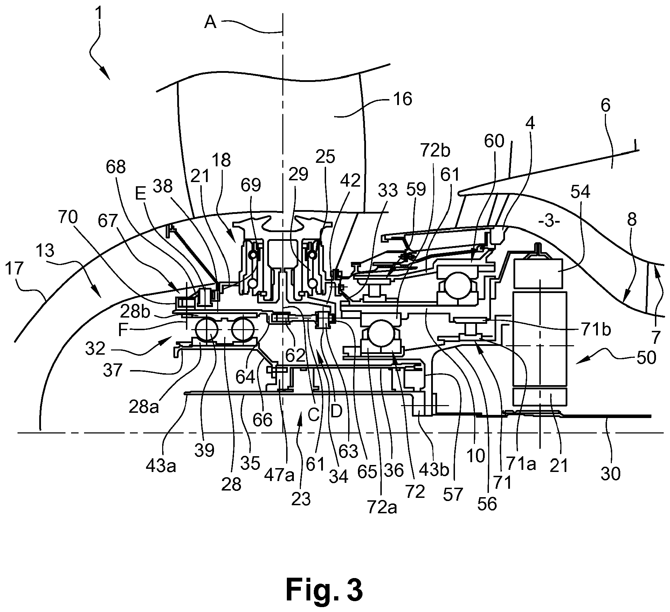

Sur la figure 3 est illustré un deuxième mode de réalisation d'un module de soufflante selon l'invention. Les éléments décrits précédemment et identiques dans la suite de la présente description portent les mêmes références numériques. Ce mode de réalisation diffère du précédent mode de réalisation d'une part, par les moyens de liaison 34 et d'autre part, par l'agencement des différents paliers au sein du module. Les moyens de liaison 34 comprennent ici un ensemble de premières biellettes 61 articulées qui sont réparties régulièrement autour de l'actionneur. Il y a autant de premières biellettes que de pales 16. Chacune des premières biellettes 61 est reliée, d'une part à un maneton 42 d'un pied 18 de pale, et d'autre part à la virole externe 38 du module de transfert de charge 32. Les premières biellettes 61 comprennent chacune une première extrémité 62 qui est articulée suivant un axe C dans une première chape 64 de la virole externe 38 du module de transfert de charge 32. Cet axe C est sensiblement parallèle à l'axe radial Y. Les premières biellettes 61 comprennent également une deuxième extrémité 63, opposée à la première extrémité 62, qui est articulée suivant un axe D, sensiblement parallèle à l'axe Y, dans une fourchette 65 portée par le maneton 42 du pied de pale. Ces premières biellettes 61 permettent de décaler axialement le module de transfert de charge 32 par rapport à l'actionneur linéaire ce qui permet de réduire l'encombrement radial. A cet effet, la virole interne 37 du module de transfert de charge 32 comprend une flasque 66 qui est fixée sur l'extrémité amont 47a du corps mobile 36 de l'actionneur linéaire. Cette flasque 66 présente une paroi sensiblement tronconique s'évasant vers l'amont (depuis l'extrémité amont 47a du corps mobile 36) de sorte à décaler axialement et radialement vers l'extérieur le module de transfert de charge 32.

Comme nous pouvons le voir sur la figure 3, au moins un organe de liaison 67 relie la virole externe 38 du module de transfert de charge 32 au rotor de soufflante. Le palier de transfert de charge 28 du module de transfert de charge 32 comprend une bague interne 28a solidaire de la virole annulaire interne 37 et une bague externe 28b solidaire de la virole annulaire externe 38. De manière avantageuse, mais non limitativement, l'organe de liaison 67 comprend deux deuxièmes biellettes 68 opposées radialement. Chaque deuxième biellette 68 présente une première extrémité qui est articulée suivant un axe E à une chape d'une patte 69 bridée sur le rotor de soufflante. Une deuxième extrémité de chaque deuxième biellette 68 est articulée suivant un axe F dans une deuxième chape 70 solidaire de la virole externe 38. Cette deuxième chape 70 est opposée sensiblement axialement à la première chape 64 où sont reliées les premières biellettes 61. Les axes E, F sont sensiblement parallèles à l'axe radial Y.

Dans cet exemple de réalisation, un premier et un deuxième paliers internes 71, 72 sont disposés entre la virole annulaire 56 et l'arbre de rotor 10 de la soufflante. Comme pour le seul palier interne 58 du mode de réalisation précédente entre la virole annulaire 56 et l'arbre de rotor 10, chaque premier et deuxième palier interne 71, 72 comprend une bague interne 71a, 72a portée par la virole annulaire 56 et une bague externe 71b, 72b, portée par l'arbre de rotor 10 de soufflante. Les bagues externes 71b, 72b sont rotatives car ces dernières sont montées sur l'arbre de rotor 10. Les bagues internes 71a, 72b sont fixes car celles-ci sont montées sur la virole annulaire 56 du porte-satellites qui est fixe. Les éléments roulants du premier palier interne sont des rouleaux tandis que les éléments roulants du deuxième palier interne 72 sont des billes. Le deuxième palier interne 72 est agencé en amont du premier palier interne 71. De même, le deuxième palier interne 72 présente un diamètre extérieur qui est supérieur au diamètre extérieur du premier palier interne 71. La jupe annulaire 57 s'étend axialement entre le premier et le deuxième paliers internes 71, 72. S'agissant des premier et deuxième paliers agencés 59, 60 entre la couronne de support 61 et l'arbre de rotor 10, le diamètre du deuxième palier 60 est supérieur à celui du premier palier 59.

Des paliers 25 entre l'anneau de support 21 annulaire fixe, et chaque pale sont agencés de manière sensiblement identique que ceux du premier mode de réalisation. En particulier, les paliers 25 sont également agencés dans le logement cylindrique 29 pour permettre la rotation de chaque pied 18. Ici, les paliers 25 sont également au nombre de deux. Les éléments roulants de ces paliers 25 comprennent des billes. Le diamètre extérieur du palier situé radialement à l'intérieur de chacun des logements cylindrique 29 est supérieur au diamètre extérieur du palier situé radialement au-dessus.

De même, dans ce mode de réalisation, le rapport de moyeu du module de soufflante est compris entre 0.25 et 0.35.

## Revendications

1. Module de soufflante (1) à pales (16) à calage variable pour un ensemble propulsif d'axe longitudinal, ledit module de soufflante (1) comprenant :
- un rotor (13) comprenant un arbre de rotor (10) suivant l'axe longitudinal X et portant les pales (16) de la soufflante (2),
- un système de changement du calage des pales (22) comprenant des moyens de liaison (34) reliés aux pales (16) de la soufflante (2) et un moyen de commande (23) agissant sur les moyens de liaison (34), le moyen de commande (23) comportant un corps fixe (35) et un corps mobile (36) en translation selon l'axe longitudinal X par rapport audit corps fixe (35),
- un palier de transfert de charge (28) agencé entre les moyens de liaison (34) et le moyen de commande (23),
- un arbre de puissance (30) entraînant l'arbre de rotor (10) via un réducteur de vitesse (50) à train épicycloïdal, le réducteur de vitesse (50) comprenant un planétaire (51) relié à l'arbre de puissance (30) et un porte-satellites (53) comprenant une virole annulaire (56) fixe solidaire d'un carter fixe (4), le corps fixe (35) du moyen de commande (23) étant monté sur ladite virole annulaire (56), et,
- au moins un palier interne (58 ; 71, 72) agencé entre la virole annulaire (56) fixe du porte-satellites (53) et l'arbre de rotor (10) de la soufflante,
**caractérisé en ce qu'**un premier et un deuxième paliers (59, 60) sont montés entre une couronne de support (61) solidaire du carter fixe (4) et l'arbre de rotor (10) de la soufflante.

2. Module de soufflante (1) selon la revendication précédente, **caractérisé en ce que** le moyen de commande (23) est installé radialement au moins en partie à l'intérieur de l'arbre de rotor (10) de la soufflante, en particulier selon un axe de pivotement des pales.

3. Module de soufflante (1) selon l'une quelconque des revendications précédentes, **caractérisé en ce que** le palier de transfert de charge (28) est monté sur le corps mobile (36) et coopère avec les moyens de liaison (34).

4. Module de soufflante (1) selon l'une quelconque des revendications précédentes, **caractérisé en ce que** le réducteur de vitesse (50) comprend une couronne extérieure (54) couplée à l'arbre de rotor (10) de la soufflante.

5. Module de soufflante (1) selon l'une quelconque des revendications précédentes, **caractérisé en ce que** le palier de transfert de charge (28) comprend une bague interne (28a), une bague externe (28b) et un roulement à deux rangées de billes (39) montées entre la bague interne (28a) et la bague externe (28b), la bague interne (28a) étant reliée à une virole interne (37) solidaire du corps mobile (36) et la bague externe étant reliée à une virole externe (38) connectée aux moyens de liaison (34).

6. Module de soufflante (1) selon la revendication précédente, **caractérisé en ce que** les moyens de liaison (34) comprennent des biellettes (61) avec chacune une première extrémité (62) articulée avec une chape (64) de la virole externe (38) et une deuxième extrémité (63) articulée avec un maneton (42) du pied (18) de pale.

7. Module de soufflante (1) selon la revendication 5, **caractérisé en ce que** les moyens de liaison (34) comprennent des articulations sphériques (40) agencées chacune dans un évidement d'un anneau solidaire de la virole externe (38) du palier de transfert de charge (28) et des doigts (41) reliés chacun à une des articulations sphériques (41), chaque doigt (41) étant solidaire d'un maneton (42) du pied (18) de pale.

8. Module de soufflante (1) selon la revendication 6, **caractérisé en ce que** le module de soufflante comprend au moins un organe de liaison (67) reliant la virole externe (38) au rotor de soufflante (13).

9. Module de soufflante (1) selon l'une quelconque des revendications précédentes, **caractérisé en ce que** le moyen de commande (23) comprend un actionneur annulaire linéaire d'axe coaxial à l'axe longitudinal X, l'actionneur linéaire comprenant le corps fixe (35) et le corps mobile (36) en translation par rapport au corps fixe (35) le long de l'axe longitudinal X.

10. Module de soufflante (1) selon l'une quelconque des revendications précédentes, **caractérisé en ce que** le corps fixe (35) comprend une paroi (44) radiale délimitant deux chambres (36a, 36b) à volume variable dans le corps mobile (36) et qui sont opposées axialement, les chambres étant destinées à recevoir un fluide, par exemple hydraulique sous pression, d'une source d'alimentation fluidique de sorte que le corps mobile (36) occupe au moins deux positions.

11. Module de soufflante (1) selon l'une quelconque des revendications précédentes, **caractérisé en ce que** le moyen de commande (23) avec le corps mobile (36) et le corps fixe (35) s'étendent axialement au moins en partie à l'intérieur de l'arbre de rotor (10) par rapport à l'axe radial, le corps fixe (35) comprenant une première extrémité amont (43a) et une deuxième extrémité aval (43b) opposées axialement, l'extrémité aval (43b) étant localisée à l'intérieur de l'arbre de rotor (10) et l'extrémité amont (43a) étant à l'extérieur de l'arbre de rotor (10).

## Patentansprüche

1. Gebläsemodul (1) mit Schaufeln (16) mit variablem Einstellwinkel für eine Antriebsmontage mit Längsachse, wobei das Gebläsemodul (1) umfasst:
- einen Rotor (13), der eine Rotorwelle (10) umfasst, die der Längsachse X folgt und die die Schaufeln (16) des Gebläses (2) trägt,
- ein System zur Änderung des Einstellwinkels der Schaufeln (22), umfassend Verbindungsmittel (34), die mit den Schaufeln (16) des Gebläses (2) verbunden sind, und ein Steuermittel (23), das auf die Verbindungsmittel (34) einwirkt, wobei das Steuermittel (23) einen feststehenden Körper (35) und einen in Bezug auf den feststehenden Körper (35) entlang der Längsachse X verschiebbar beweglichen Körper (36) umfasst,
- ein Lastübertragungslager (28), das zwischen den Verbindungsmitteln (34) und dem Steuermittel (23) angeordnet ist,
- eine Leistungswelle (30), die die Rotorwelle (10) über ein Untersetzungsgetriebe (50) mit Umlaufrädergetriebe, wobei das Untersetzungsgetriebe (50) ein Planetenrad (51), das mit der Leistungswelle (30) verbunden ist, und einen Satellitenträger (53) umfasst, der eine feststehende ringförmige Halterung (56) umfasst, die fest mit einem feststehenden Gehäuse (4) verbunden ist, wobei der feststehende Körper (35) des Steuermittels (23) an der ringförmigen Halterung (56) montiert ist, und
- mindestens ein inneres Lager (58; 71, 72), das zwischen der feststehenden ringförmigen Halterung (56) des Satellitenträgers (53) und der Rotorwelle (10) des Gebläses angeordnet ist,
**dadurch gekennzeichnet, dass** ein erstes und ein zweites Lager (59, 60) zwischen einer Stützkrone (61), die fest mit dem feststehenden Gehäuse (4) verbunden ist, und der Rotorwelle (10) des Gebläses montiert sind.

2. Gebläsemodul (1) nach dem vorstehenden Anspruch, **dadurch gekennzeichnet, dass** das Steuermittel (23) zumindest teilweise im Inneren der Rotorwelle (10) des Gebläses, insbesondere entlang einer Schwenkachse der Schaufeln, radial installiert ist.

3. Gebläsemodul (1) nach einem der vorstehenden Ansprüche, **dadurch gekennzeichnet, dass** das Lastübertragungslager (28) auf dem beweglichen Körper (36) montiert ist und mit den Verbindungsmitteln (34) zusammenwirkt.

4. Gebläsemodul (1) nach einem der vorstehenden Ansprüche, **dadurch gekennzeichnet, dass** das Untersetzungsgetriebe (50) eine äußere Krone (54) umfasst, die mit der Rotorwelle (10) des Gebläses gekoppelt ist.

5. Gebläsemodul (1) nach einem der vorstehenden Ansprüche, **dadurch gekennzeichnet, dass** das Lastübertragungslager (28) einen Innenring (28a), einen Außenring (28b) und ein Radlager mit zwei Reihen von Kugeln (39), die zwischen dem Innenring (28a) und dem Außenring (28b) montiert sind, umfasst, wobei der Innenring (28a) mit einem Innenmantel (37) verbunden ist, der fest mit dem beweglichen Körper (36) verbunden ist, und der Außenring mit einem Außenmantel (38) verbunden ist, der mit den Verbindungsmitteln (34) verbunden ist.

6. Gebläsemodul (1) nach einem der vorstehenden Ansprüche, **dadurch gekennzeichnet, dass** die Verbindungsmittel (34) Schwingen (61) umfassen, mit jeweils einem ersten Ende (62), das an einer Abdeckung (64) des Außenmantels (38) angelenkt ist, und einem zweiten Ende (63), das an einem Zapfen (42) des Schaufelfußes (18) angelenkt ist.

7. Gebläsemodul (1) nach Anspruch 5, **dadurch gekennzeichnet, dass** die Verbindungsmittel (34) kugelförmige Gelenke (40), die jeweils in einer Aussparung eines Begrenzungsrings angeordnet sind, der fest mit dem dem Außenmantel (38) des Lastübertragungslagers (28) verbunden ist, und Finger (41) umfassen, die jeweils mit einem der kugelförmigen Gelenke (41) verbunden sind, wobei jeder Finger (41) fest mit einem Zapfen (42) des Schaufelfußes (18) verbunden ist.

8. Gebläsemodul (1) nach Anspruch 6, **dadurch gekennzeichnet, dass** das Gebläsemodul mindestens ein Verbindungsorgan (67) umfasst, das den Außenmantel (38) mit dem Gebläserotor (13) verbindet.

9. Gebläsemodul (1) nach einem der vorstehenden Ansprüche, **dadurch gekennzeichnet, dass** das Steuermittel (23) einen linearen ringförmigen Aktuator mit koaxialer Achse zur Längsachse X umfasst, wobei der lineare Aktuator den feststehenden Körper (35) und den in Bezug auf den feststehenden Körper (35) entlang der Längsachse X verschiebbar beweglichen Körper (36) umfasst.

10. Gebläsemodul (1) nach einem der vorstehenden Ansprüche, **dadurch gekennzeichnet, dass** der feststehende Körper (35) eine radiale Wand (44) umfasst, die zwei Kammern (36a, 36b) mit variablem Volumen im beweglichen Körper (36) begrenzt, die axial entgegengesetzt sind, wobei die Kammern dazu vorgesehen sind, ein Fluid, beispielsweise ein druckbeaufschlagtes hydraulisches, einer Fluideinspeisungsquelle derart aufzunehmen, dass der bewegliche Körper (36) mindestens zwei Positionen einnimmt.

11. Gebläsemodul (1) nach einem der vorstehenden Ansprüche, **dadurch gekennzeichnet, dass** sich das Steuermittel (23) mit dem beweglichen Körper (36) und dem feststehenden Körper (35) in Bezug auf die radiale Achse mindestens teilweise im Inneren der Rotorwelle (10) axial erstrecken, wobei der feststehende Körper (35) ein stromaufwärtiges erstes Ende (43a) und ein stromabwärtiges zweites Ende (43b), die axial entgegengesetzt sind, umfasst, wobei sich das stromabwärtige Ende (43b) im Inneren der Rotorwelle (10) befindet und das stromaufwärtige Ende (43a) außerhalb der Rotorwelle (10) befindet.

## Claims

1. A fan module (1) with variable pitch blades (16) for a longitudinal axis propulsion assembly, said fan module (1) comprising:
- a rotor (13) comprising a rotor shaft (10) along the longitudinal axis X and carrying the blades (16) of the fan (2),
- a system for changing the pitch of the blades (22) comprising connecting means (34) connected to the blades (16) of the fan (2) and a control means (23) acting on the connecting means (34), the control means (23) comprising a fixed body (35) and a movable body (36) translatable along the longitudinal axis X relative to said fixed body (35), and
- a load transfer bearing (28) arranged between the connecting means (34) and the control means (23),
**characterized in that** the fan module comprises a power shaft (30) driving the rotor shaft (10) via an epicyclic train speed reducer (50), the speed reducer (50) comprising a sun gear (51) connected to the power shaft (30) and a satellite carrier (53) comprising a fixed annular ferrule (56) secured to a fixed casing (4), the fixed body (35) of the control means (23) being mounted on said annular ferrule.

2. The fan module (1) according to the preceding claim, **characterized in that** the control means (23) is installed radially at least in part inside the rotor shaft (10) of the fan, in particular along a pivot axis of the blades.

3. The fan module (1) according to any of the preceding claims, **characterized in that** the load transfer bearing (28) is mounted on the movable body (36) and cooperates with the connecting means (34).

4. The fan module (1) according to any of the preceding claims, **characterized in that** the speed reducer (50) comprises an outer ring gear (54) coupled to the rotor shaft (10) of the fan.

5. The fan module (1) according to any of the preceding claims, **characterized in that** the load transfer bearing (28) comprises an inner ring (28a), an outer ring (28b), a double row ball bearing (39) mounted between the inner ring (28) and the outer ring (28b), the inner ring (28a) being linked to an inner ferrule (37) secured to the movable body (36) and the outer ring being linked to an outer ferrule (38) connected to connecting means (34).

6. The fan module (1) according to the preceding claim, **characterized in that** the connecting means (34) comprise connecting rods (61) each with a first end (62) articulated with a clevis (64) of the outer ferrule (38) and a second end (63) articulated with a crank pin (42) of the blade bottom (18).

7. The fan module (1) according to claim 5, **characterized in that** the connecting means (34) comprise spherical joints (40) each arranged in a recess of a ring secured to the outer ferrule (38) of the load transfer bearing (28) and fingers (41) each connected to one of the spherical joints (41), each finger (41) being secured to a crank pin (42) of the blade bottom (18).

8. The fan module (1) according to claim 6, **characterized in that** the fan module comprises at least one connecting member (67) connecting the outer ferrule (38) to the fan rotor (13).

9. The fan module (1) according to any of the preceding claims, **characterized in that** the control means (23) comprises a linear annular actuator with an axis coaxial to the longitudinal axis (X), the linear actuator comprises a fixed body (35) and a movable body (36) in translation with respect to the fixed body (35) along the longitudinal axis (X).

10. The fan module (1) according to any of the preceding claims, **characterized in that** the fixed body (35) comprises a radial wall (44) delimiting two chambers (36a, 36b) with variable volume in the movable body (36) and which are axially opposed, the chambers are intended to receive a fluid, for example hydraulic under pressure, from a fluid supply source so that the movable body (36) occupies at least two positions.

11. The fan module (1) according to any of the preceding claims, **characterized in that** the control means (23) with the movable body (35) and the fixed body (35) extending axially at least in part within the fan rotor (10) with regard to the radial axis, le fixed body (35) comprises an upstream first end (43a) and a downstream second end (43b) opposed axially, the downstream end (43b) is located inside the rotor shaft (10) while the upstream end (43a) is outside the rotor shaft (10).
